# DEMANDE DE BREVET EUROPEEN

(11) **EP 0 677 671 A1**
(43) Date de publication de la demande: **18.10.1995**
(21) Numéro de dépôt: 95400760.5
(22) Date de dépôt: 05.04.1995
(51) Int. Cl.: F16C 19/16, F16C 35/06, F16C 25/08, B62D 1/16

(54) **Cartouche perfectionnée à roulement à contact oblique et son application à une direction de véhicule**

(30) Priorité: 15.04.1994 FR 9404546
(71) Demandeur: NADELLA, F-18102 Vierzon Cédex (FR)
(72) Inventeur: Labedan, Jean-Denis, F-18000 Bourges (FR); Regnier, Laurent, F-18100 Vierzon (FR)
(74) Mandataire: Polus, Camille

(57) **Abrégé**

La cartouche qui comprend un boîtier (10) avec deux tronçons (101, 102) et avec un raccord (103) réunissant ces tronçons et qui est apte à contenir dans une chambre (100) un roulement (20) avec une bague (21) qui a une portée (211) et un chemin de roulement (212), avec une bague (22) qui a une portée (221) et un chemin de roulement (222) et avec des corps (23) roulants est telle que le boîtier (10) comprend une zone d'appui (11) qui est située sur le raccord (103) et qui est destinée à recevoir la portée extérieure (211) et, placé dans la chambre (100), un anneau (30) avec un bout (31) destiné à venir au contact de la portée intérieure (221) de la bague intérieure (22).

Application aux véhicules automobiles terrestres.

## Description

La présente invention concerne les roulements à contact oblique notamment à billes et, plus particulièrement, a pour objets une cartouche à roulement de ce type et son application notamment à une colonne de direction pour véhicule par exemple automobile terrestre.

Pour de nombreuses applications telles que celles s'appliquant aux colonnes de direction pour véhicules automobiles en particulier terrestres, il est nécessaire de guider en rotation un arbre monté dans un support à l'aide d'au moins un roulement par exemple à billes, à contact oblique interposé entre arbre et support et placé dans un logement du support.

Pour de telles applications, il faut que les roulements utilisés soient à même d'accepter des tolérances de fabrication et des défauts de forme des logements qui sont parfois très importants, tout en ayant un fonctionnement sans jeu et en conservant un couple de rotation petit. De plus, le fonctionnement doit se faire avec un niveau de bruit faible et pratiquement sans transmettre de vibrations.

Il faut en outre que l'assemblage et la mise en oeuvre de tels roulements soient les plus simples possibles.

Diverses solutions ont déjà été proposées pour satisfaire à ce type d'utilisation, mais aucune d'elles ne donnent totalement satisfaction à des coûts de production et de mise en oeuvre acceptables, et avec une longévité satisfaisante.

Certaines solutions proposées comprennent souvent une frette en matière synthétique qui maintient par l'extérieur tous les composants du roulement à contact oblique. D'autres solutions font appel à un roulement dont le diamètre extérieur est décalé par rapport au tore du chemin de roulement au lieu d'être tangent à celui-ci. On observera que cette dernière solution reste quand même tributaire des ovalisations importantes qui affectent souvent les supports de colonne de direction en particulier munies d'échancrures. D'autres solutions font appel à la fois à une frette et à un anneau de tolérance en matières synthétiques.

Des exemples de solutions sont par exemple exposées dans les documents FR 2 426 828, FR 2 426 829, FR 2 586 069, FR 2 628 160 et FR 2 669 086 auxquels on pourra se reporter utilement pour plus amples informations.

Le but de l'invention est de remédier à ce type de difficultés à l'aide d'une cartouche à roulement à contact oblique notamment à billes qui forme une entité indissociable prête à être mise en oeuvre, qui s'affranchit des tolérances de fabrication et des défauts de forme du logement destiné à la recevoir et qui nuiraient à son bon fonctionnement normal, qui filtre les bruits et les vibrations tout en étant toutefois d'un coût de production et de mise en oeuvre relativement modique.

L'invention a pour objet une cartouche à roulement à contact oblique notamment à billes qui est destinée à être placée dans un logement et qui comprend, notamment, un boîtier avec deux tronçons axiaux successifs de tailles propres différentes et avec un raccord intermédiaire réunissant ces tronçons, et qui est apte à contenir dans une chambre un roulement avec une bague extérieure en coupelle qui a une portée extérieure et un chemin de roulement extérieur torique, avec une bague intérieure en coupelle qui a une portée intérieure et un chemin de roulement intérieur torique et avec des corps roulants éventuellement logés dans une cage. Cette cartouche est remarquable en ce que le boîtier comprend une zone d'appui qui est située en partie sur le raccord et qui est destinée à recevoir la portée extérieure de la bague extérieure et, placé dans la chambre, un anneau avec un bout destiné à venir au contact de la portée intérieure de la bague intérieure.

L'invention a aussi pour objet l'application d'une telle cartouche à roulement à contact oblique notamment à billes à une colonne de direction notamment d'automobile par exemple terrestre.

D'autres caractéristiques de l'invention apparaîtront à la lecture de la description et des revendications qui suivent ainsi qu'à l'examen du dessin annexé, donné seulement à titre d'exemple, où :
- la Figure 1 est une coupe méridienne axiale schématique d'un mode de réalisation d'une cartouche à roulement à contact oblique notamment à billes selon l'invention dans son application particulière à une colonne de direction pour véhicule automobile terrestre;
- la Figure 2 est une coupe méridienne partielle d'un mode de réalisation d'une cartouche selon l'invention;

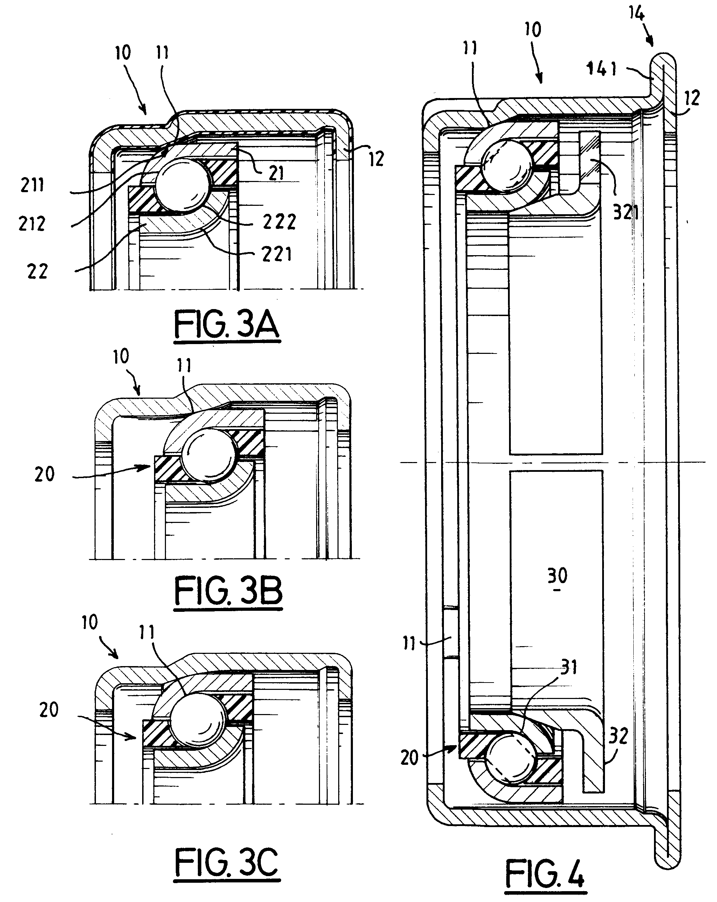

- les Figures 3A, 3B, 3C sont des vues analogues à celles de la Figure 2 de variantes d'exécution d'une cartouche selon l'invention;
- la Figure 4 est une vue analogue à celle de la Figure 2 d'un autre mode de réalisation de l'invention;

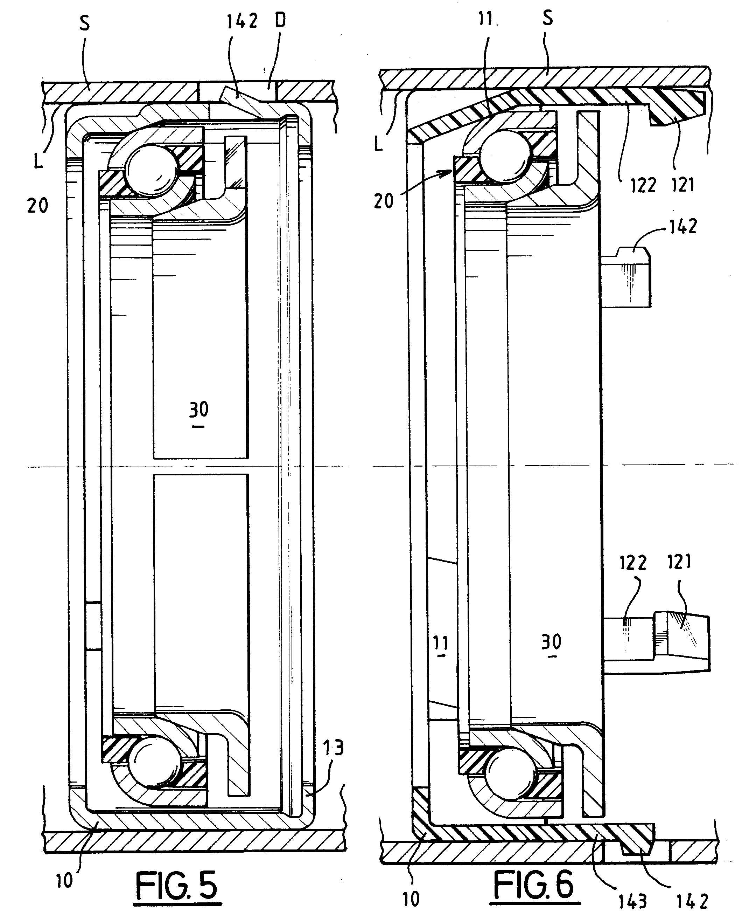

- la Figure 5 est une vue analogue à celle de la Figure 2 d'un autre mode de réalisation;
- la Figure 6 est une vue analogue à celle de la Figure 2 d'un autre mode de réalisation; et

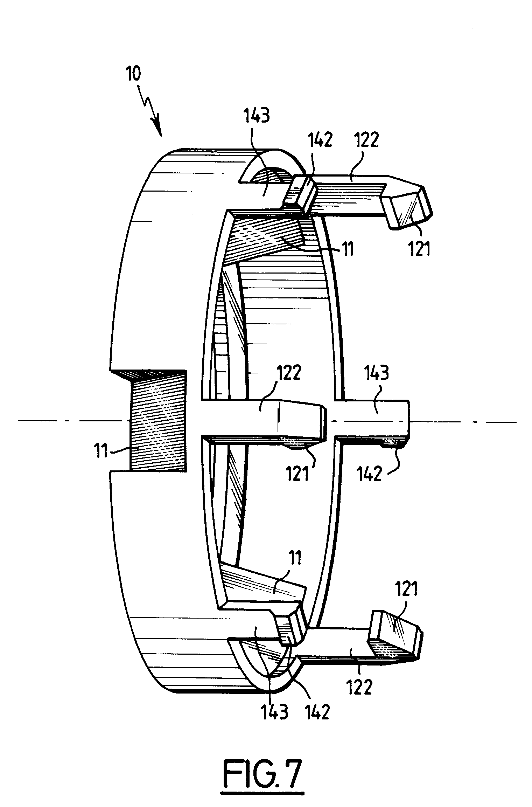

- la Figure 7 est une vue perspective partielle d'un constituant du mode de réalisation de la Figure 6.

Les roulements, en particulier à billes, à contact oblique, d'une part, et les colonnes de direction notamment de véhicules automobiles par exemple terrestres, d'autre part, étant bien connus dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté. En particulier, on pourra se reporter utilement aux documents précités pour plus amples informations.

Dans ce qui suit, on utilise toujours un même numéro de référence pour identifier un élément homologue quel que soit le mode de réalisation ou sa variante d'exécution.

Pour la commodité de l'exposé, on décrira successivement chacun des constituants d'une cartouche selon l'invention avant d'en exposer au besoin la fabrication, la mise en oeuvre et le fonctionnement.

On décrira une cartouche selon l'invention dans son application particulière aux colonnes de direction de véhicules automobiles terrestres, mais il est clair que cette application spécifique n'est pas la seule possible.

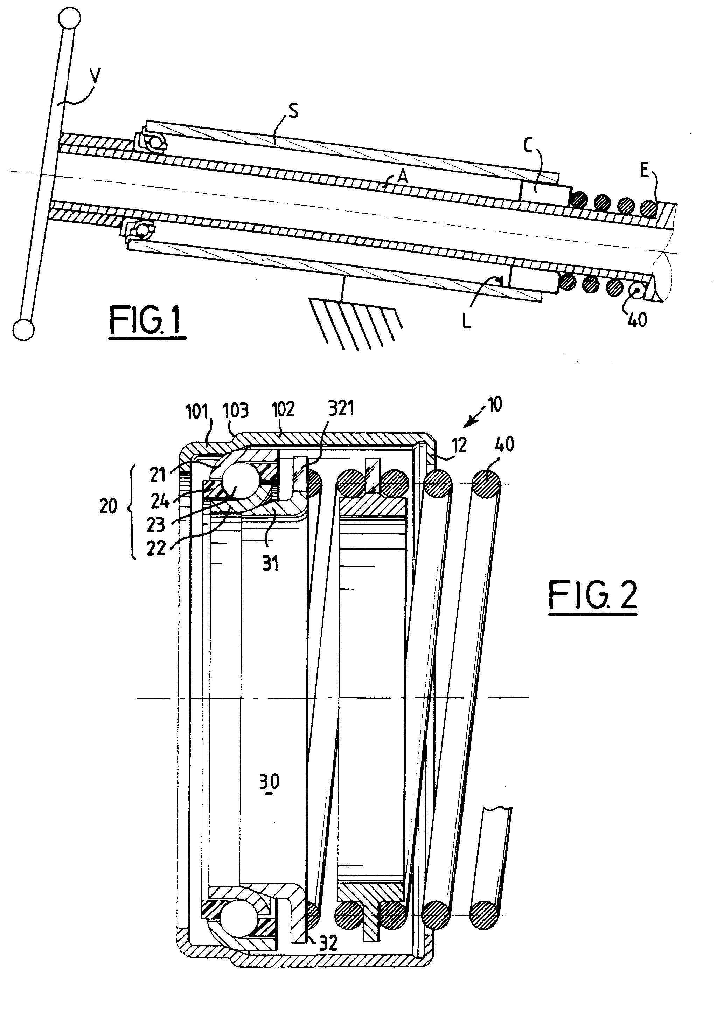

Comme on le voit sur la Figure 1, une colonne de direction pour véhicules automobiles terrestres comprend, notamment, un support S destiné à être fixé, directement ou indirectement, à la coque ou structure du véhicule et un tronçon A d'un arbre de colonne à l'extrémité libre duquel se trouve placé un volant de direction V. Un tel tronçon d'arbre est monté dans le support à l'aide d'au moins un palier et de préférence de deux, placés chacun dans un logement L du support comme illustré. De préférence, l'un au moins de ces paliers est fait d'un roulement notamment à billes, à contact oblique logé dans une cartouche C selon l'invention. De préférence, pour ce faire le tronçon d'arbre est muni d'un épaulement E annulaire ou similaire, pour les raisons qui apparaîtront par la suite.

Comme on le voit, une cartouche selon l'invention comprend, essentiellement, un boîtier 10, un roulement 20, un anneau 30 et, s'il y a lieu, un ressort 40.

Le boîtier 10 a, de préférence, deux tronçons 101, 102 axiaux successifs de tailles et s'il y a lieu de configurations propres différentes, et un raccord 103 intermédiaire réunissant ces tronçons. Ce boîtier délimite une chambre 100 intérieure.

Le boîtier 10 comprend aussi une zone d'appui 11 à l'intérieur de la chambre 100, qui est située sur le raccord 103 et dont le rôle apparaîtra par la suite. La zone d'appui 11 est continue ou, de préférence, discontinue et dans ce cas comprend par exemple trois plages angulairement équidistantes. Cette zone d'appui est conique ou sphérique, par exemple concave ou convexe.

Le boîtier 10 comprend aussi des moyens de retenue 12 dont on comprendra le rôle par la suite. Ces moyens de retenue 12 comprennent au moins un bec 121 centripète qui est, de préférence, porté par une languette 122 associée au tronçon du boîtier de plus grande taille, comme illustré sur les figures du dessin.

Le boîtier 10 comprend aussi de préférence un support 13 apte à recevoir un ressort pour les raisons qui apparaîtront par la suite. Ce support 13 se présente de préférence à la manière de bras ou rabats radiaux centripètes, par exemple régulièrement répartis portés par le tronçon du boîtier de plus grande taille, comme illustré sur les figures du dessin.

Le boîtier 10 est muni, s'il y a lieu, d'un dispositif 14 pour son maintien axial dans le logement L qui reçoit la cartouche. Un tel dispositif de maintien 14 comprend par exemple un rebord 141 centrifuge continu en collerette ou discontinu, porté par le tronçon de plus grande taille du boîtier selon un mode de réalisation ou comprend par exemple au moins une protubérance 142 centrifuge telle qu'une patte ou un téton apte à coopérer avec un dégagement D complémentaire du logement L selon un autre mode de réalisation. De préférence, la protubérance 142 est portée par une lame 143 du boîtier.

Le roulement 20 comprend, essentiellement, une bague 21 extérieure et une bague 22 intérieure entre lesquelles sont placés des corps roulants 23 tels que des billes, s'il y a lieu montés dans une cage 24. Comme on peut l'observer, la bague extérieure 21 en coupelle présente une portée extérieure 211 et un chemin de roulement 212 extérieur torique. De même, la bague intérieure 22 en coupelle comprend une portée 221 intérieure et un chemin de roulement 222 intérieur torique.

L'anneau 30 comprend un bout 31, de préférence conique ou similaire, destiné à coopérer avec la portée intérieure 221 de la bague intérieure 22 pour les raisons qui apparaîtront par la suite, ainsi qu'une butée 32 destinée à coopérer avec un ressort pour les raisons qui apparaîtront par la suite. S'il y a lieu et de préférence, la butée 32 est munie localement d'au moins un ajour 321 permettant de placer l'anneau 30 dans la chambre 100 sans être gêné par les moyens de retenue 12 et/ou, comme on le comprendra par la suite, par le support 13. Ces ajours et moyens de retenue coopèrent par exemple à la manière d'un assemblage à baïonnette. Ils permettent la mise en place de l'anneau dans la chambre par exemple par mise en registre initial des becs et ajours qui s'engagent les uns dans les autres pour l'introduction de l'anneau dans la chambre. Ensuite, par exemple par rotation de l'anneau, les becs se trouvent placés face à la butée et empêchent l'anneau de sortir de la chambre.

Un ressort 40, par exemple à boudin à spires hélicoïdales et s'il y a lieu en deux parties, est de préférence placé dans la chambre 100 de manière à reposer à la fois contre le support 13 du boîtier 10 et la butée 32 de l'anneau 30 afin d'appliquer les uns contre les autres, d'une part, bagues 21 et 22 et corps roulants 23 et, d'autre part, portée extérieure 211 de la bague extérieure 21 et zone d'appui 11 du boîtier 10.

Le boîtier est fait par exemple en métal et dans ce cas, il peut ne pas être traité pour acquérir une dureté aussi importante que celle d'un chemin de roulement afin de ne pas être fragile et trop cassant. Le boîtier métallique est, de préférence, recouvert sur l'une au moins de ses deux faces, et s'il y a lieu sur ses deux faces, d'une couche d'une matière synthétique appropriée d'épaisseur convenable qui sert d'amortisseur de vibrations et au besoin de rattrapage de jeu, comme on le comprendra par la suite. Ce boîtier peut être fait aussi totalement en une matière synthétique appropriée qui est résistante et qui absorbe particulièrement bien les vibrations. Une matière qui convient à une telle application est par exemple celle qui figure sous le nom de HYTREL sur le catalogue de la société DU PONT DE NEMOURS.

Le roulement 20 proprement dit est fait de toutes matières classiques convenables.

L'anneau 30 est par exemple fait en métal ou en une matière synthétique appropriée.

Tous les constituants d'une cartouche selon l'invention sont confectionnés selon des techniques traditionnelles convenablement adaptées aux matériaux dont ils sont faits, et sont réunis, assemblés et montés comme cela ressort particulièrement bien de l'examen des figures du dessin.

En particulier on fait en sorte qu'après avoir logé le roulement dans la chambre du boîtier, on met en place l'anneau, les ajours de sa butée permettant d'échapper au moins momentanément au support et aux moyens de retenue qui, ensuite maintiennent le tout assemblé en une entité normalement indissociable et prête à être mise en oeuvre. S'il y a lieu, cette cartouche contient aussi le ressort, totalement ou partiellement placé dans la chambre et, s'il y a lieu, à l'état au moins partiellement bandé.

Cette entité que constitue la cartouche étant ainsi préparée, il suffit de la mettre en place dans son logement.

Suivant l'extrémité d'une colonne de direction à laquelle une cartouche selon l'invention est utilisée, c'est le rebord, continu ou discontinu, du dispositif de maintien axial qui fixe la position longitudinale de la cartouche en prenant appui par exemple sur la tranche libre correspondante du support de la colonne de direction. Ou bien ce sont la ou les protubérances en forme de pattes ou de tétons par exemple portés chacun par une lame qui s'engage(nt) dans un dégagement approprié du logement du support de la colonne de direction. Un tel dégagement a, par exemple, la configuration d'une gorge circulaire où d'évidement(s) adapté à la géométrie des protubérances en forme et répartition. Comme on peut l'observer, lorsqu'on utilise des protubérances sur pattes, une fois la cartouche engagée correctement dans son logement, ces pattes ne peuvent plus se déformer vers l'extérieur pour permettre aux pattes ou tétons d'échapper au dégagement et d'en sortir, et rendent ainsi la cartouche indéfectible.

Il suffit alors au besoin de libérer au moins partiellement le ressort de son support du boîtier pour qu'il vienne reposer sur l'épaulement approprié du tronçon d'arbre de la colonne de direction, comme illustré sur la Figure 1.

Comme on le voit, grâce à la cartouche selon l'invention le chemin de roulement extérieur de la bague extérieure se trouve en quelque sorte en "porte-à-faux" et "désolidarisé" physiquement de tout contact avec le logement qui reçoit le boîtier. De la sorte, le support de la colonne de direction où est ménagé le logement accepte des tolérances de fabrication de l'ordre de 0,5 mm et des défauts de forme lui donnant une configuration ovale de l'ordre de 1 mm sur un diamètre de l'ordre de 30 à 40 mm, sans pour autant que le roulement proprement dit risque de se rompre ou de se briser.

Du fait de l'adoption d'une zone d'appui du boîtier discontinue et, de préférence, faite de plages à 120° les unes des autres, on obtient un appui isostatique. De la sorte aucun jeu radial n'apparaît sous l'effort axial du ressort. En effet, autrement dans le cas d'un logement ou d'un boîtier ovalisé et par exemple conique continu, le contact ne se ferait qu'en deux points du cône où le cercle inscrit est le plus petit, là où le contact axial se fait le premier, et alors selon une direction perpendiculaire à celle qui joint ces deux points de contact, apparaîtrait un jeu radial qui produirait des bruits par claquement et/ou des défauts de rotation si ce jeu se répercutait dans le roulement.

La surface extérieure du boîtier faite en une matière synthétique, que ce boîtier soit fait en totalité en matière synthétique ou seulement superficiellement revêtu d'une telle matière, évite le contact direct métal-métal entre boîtier et logement du support de colonne de direction qui transmet bien les vibrations.

On voit donc que grâce à l'invention, on a une cartouche avec un boîtier à roulement à contact oblique qui est facile à construire, à transporter et à mettre en place, et qui palie la plupart des inconvénients des solutions précédemment connues.

S'il y a lieu, le boîtier de la cartouche selon l'invention est fait d'un seul tenant continu ou fendu ou en plusieurs parties qui sont réunies et maintenues assemblées ensemble à l'aide de moyens de réunion par exemple du type à encliquetage ou du type à joncs élastiques ou similaires.

Ce qui précède met bien en lumière les particularités distinctives de l'invention, l'intérêt qu'elle offre et les avantages qu'elle procure.

## Revendications

**1 -** Cartouche à roulement à contact oblique notamment à billes qui est destinée à être placée dans un logement et qui comprend notamment un boîtier (10) avec deux tronçons (101, 102) axiaux successifs de tailles propres différentes et avec un raccord (103) intermédiaire réunissant ces tronçons et qui est apte à contenir dans une chambre (100) un roulement (20) avec une bague (21) extérieure en coupelle qui a une portée (211) extérieure et un chemin de roulement (212) extérieur torique, avec une bague (22) intérieure en coupelle qui a une portée (221) intérieure et un chemin de roulement (222) intérieur torique et avec des corps (23) roulants éventuellement logés dans une cage (24), cartouche caractérisée en ce que le boîtier (10) comprend une zone d'appui (11) qui est située en partie sur le raccord (103) et qui est destinée à recevoir la portée extérieure (211) de la bague extérieure (21) et, placé dans la chambre (100), un anneau (30) avec un bout (31) destiné à venir au contact de la portée intérieure (221) de la bague intérieure (22).

**2 -** Cartouche selon la revendication 1, caractérisée en ce que la zone d'appui (11) est de préférence discontinue.

**3 -** Cartouche selon la revendication 2, caractérisée en ce que la zone d'appui (11) comprend trois plages angulairement équidistantes.

**4 -** Cartouche selon l'une quelconque des revendications 1 à 3, caractérisée en ce que la zone d'appui (11) est conique.

**5 -** Cartouche selon l'une quelconque des revendications 1 à 3, caractérisée en ce que la zone d'appui (11) est sphérique.

**6 -** Cartouche selon l'une quelconque des revendications 1 à 5, caractérisée en ce que la zone d'appui (11) est concave.

**7 -** Cartouche selon l'une quelconque des revendications 1 à 5, caractérisée en ce que la zone d'appui (11) est convexe.

**8 -** Cartouche selon l'une quelconque des revendications 1 à 7, caractérisée en ce que le boîtier (10) comprend des moyens de retenue (12) aptes à maintenir dans la chambre (100) du boîtier (10) l'anneau (30) et tout ce qui s'y trouve une fois qu'ils y ont été placés.

**9 -** Cartouche selon la revendication 8, caractérisée en ce que les moyens de retenue (12) comprennent au moins, associé au tronçon (101, 102) de plus grande taille, un bec (121) centripète porté s'il y lieu par une languette (122) et apte à entraver l'anneau (30) pour l'empêcher de sortir de la chambre (100) du boîtier (10).

**10 -** Cartouche selon la revendication 9, caractérisée en ce que la languette (122) est flexible.

**11 -** Cartouche selon l'une quelconque des revendications 1 à 10, caractérisée en ce que l'anneau (30) est muni à l'opposé de son bout (31) d'une butée (32) apte à recevoir un ressort.

**12 -** Cartouche selon l'une quelconque des revendications 1 à 11, caractérisée en ce que le boîtier (10) est muni d'un support (13) apte à recevoir un ressort.

**13 -** Cartouche selon l'une quelconque des revendications 11 et 12, caractérisée en ce qu'un ressort (40) est placé dans la chambre (100) de manière à reposer à la fois contre le support (13) du boîtier (10) et la butée (32) de l'anneau (30) afin d'appliquer les uns contre les autres, d'une part, bagues (21, 22) et corps roulants (23) et, d'autre part, portée extérieure (211) de la bague extérieure (21) et zone d'appui (11) du boîtier (10).

**14 -** Cartouche selon la revendication 13, caractérisée en ce que le ressort (40) est un ressort à boudin à spires hélicoïdales.

**15 -** Cartouche selon l'une quelconque des revendications 1 à 14, caractérisée en ce que le boîtier (10) est muni d'un dispositif (14) pour son maintien axial dans le logement qui reçoit la cartouche.

**16 -** Cartouche selon la revendication 15, caractérisée en ce que ce dispositif de maintien (14) comprend un rebord (141) centrifuge porté par le tronçon (101, 102) de plus grande taille du boîtier (10).

**17 -** Cartouche selon la revendication 15, caractérisée en ce que ce dispositif de maintien (14) comprend au moins une protubérance (142) centrifuge apte à coopérer avec un dégagement complémentaire du logement.

**18 -** Cartouche selon la revendication 17, caractérisée en ce que la protubérance (142) est portée par une lame (143) du boîtier (10).

**19 -** Application d'une cartouche conforme à l'une quelconque des revendications 1 à 18 à une colonne de direction de véhicule automobile notamment terrestre.
